# EUROPEAN PATENT SPECIFICATION

(11) **EP 3 175 981 B1**
(45) Date of publication and mention of the grant of the patent: **23.05.2018**
(21) Application number: 16201050.8
(22) Date of filing: 29.11.2016
(51) Int. Cl.: B32B 7/12, B32B 27/10, B32B 3/26, B32B 7/06, B32B 37/12, B32B 38/04, B32B 43/00

(54) **A SUPPORT FOR FULLY RECYCLABLE FOOD PRODUCTS**
VOLLSTÄNDIG RECYCELBARER NAHRUNGSMITTELTRÄGER
SUPPORT POUR PRODUIT ALIMENTAIRE ENTIÈREMENT RECYCLABLE

(30) Priority: 01.12.2015 IT UB20156049
(43) Date of publication of application: 07.06.2017
(73) Proprietor: M.E.P. SOLUTION PACKAGING S.r.l., 46100 Mantova (IT)
(72) Inventor: FALTRACCO, Danilo, 36045 LONIGO (VICENZA) (IT); FALTRACCO, Diego, 37047 SAN BONIFACIO (VERONA) (IT); MARANI, Mario, 46027 SAN BENEDETTO PO (MANTOVA) (IT)
(74) Representative: Paparo, Aldo

(56) References cited:
- WO-A1-2009/014483
- FR-A1- 2 976 923
- US-A- 4 549 917

## Description

The present invention relates to a support to be used for packaging food products, which enables the recyclability of the materials of the support itself to be improved, in particular allowing the complete separation of the material that performs the function of sustaining the food product from the material intended to remain in contact with the food product.

Food packaging currently comprises at least one sheet made of paper material, for example, cardboard, which sustains the food product. Such product cannot come into contact with the sheet directly, considering that a paper material is not suitable, as provided by law, to preserve the product in suitable conditions for the relative consumption, for the purpose of preserving the health of the consumer.

The sheet is therefore covered with a coating film made of material suitable to come into contact with the food, such as, for example, polythene.

The coating film is positioned on a first face of the cardboard sheet preferably through an adhesive material interposed between them. The same sheet is subsequently die-cut so that the film remains attached to the cardboard of the sheet.

Subsequently, the food product is positioned on the film, and packaged using a further upper film that is positioned on the product and in turn attached to the support. In this way, a chamber for containing the product is defined from which the air can subsequently be aspirated to create the vacuum and make the upper film adhere to the product itself.

When the package needs to be disposed of, for the complete recycling of the packaging materials, it is necessary to completely and cleanly separate the sheet from the coating film.

For that purpose, during the production of the package, a weakening line is performed on the support which is suitable for defining a tongue of the support which can be easily detached from the remaining part of the support so as to tear from such remaining part the coating film, by moving such tongue.

The creation of the weakening line is currently performed by realizing a perforation on the support on the side of a second face of the cardboard opposite to the first face which has already been covered with the coating film. Such perforation ensures that the edges of the two portions of the support that are defined by the weakening line itself, of which one is actually the tongue, are brought even closer to the coating film.

Therefore, when the coating is torn, a part of the sheet is also detached, remaining attached to the coating film, which is therefore no longer recyclable.

Such problem is facilitated by the presence of paints, for example solvent-based, on the first face of the support, which is covered with the coating film.

Document FR 2 976 923 discloses a bi-material base element having a support including a detachable portion on a region of an attachment surface integral with a protective film, to allow gripping and pulling of the support to ensure separation between the support and the protective film on the rest of the attachment surface, where the support is made.

An object of the present invention is that of developing a method for producing a support for food products comprising a sheet of cardboard covered with a coating film, which allows the sheet to be easily separable from the coating film, so as to make such sheet and film completely recyclable.

Another object of the present invention is that of developing a method for producing a support for food products comprising a sheet of cardboard covered with a coating film, which allows the sheet to be quickly separated from the coating film.

A further object of the present invention is that of developing a support for food products comprising a sheet of cardboard covered with a coating film, which allows such film to be separated perfectly from the sheet so that they are completely recyclable.

Such objects are obtained through a method for producing a support for food products, comprising the step of preparing a sheet of paper material (1) configured to be covered, on a first side (10) of said sheet, with a film which is suitable to remain in contact with a food product, and subsequently a step of realizing at least a weakening line (2) which divides said sheet into at least a first portion (1 a) and a second portion (1 b), said first portion being adapted to be detached from said second portion for the purpose of subsequent separation of said film at least from said second portion,wherein said method comprises a step of coating said first side with said film by means of an adhesive material interposed between said first side and said film, said realization step being performed prior to said coating step,said realization step in turn comprises at least a first perforation step, which is performed starting from said first side towards a second side (20) opposite to said first sides wherein said realization step comprises a second perforation step performed starting from said first side towards said second side, and subsequent to said first perforation step,characterized in that said first perforation step is suitable to reduce the connection between said portions, thereby defining a plurality of perforations (P") being separate from one another via connecting bridges (3') between the portions themselves. Considering that the step of realizing the weakening line is performed prior to the coating step, the same coating step may be performed through a perforation made starting from the first face, which is the one that will be subsequently coated by the film.

In this way, such perforation produces a curving of the edges of the portions of the support, which are defined by the weakening line which is formed during the same first perforation step. Such curving tends to distance the edges of such portions from the ideal surface according to which the coating film will subsequently be positioned on the first face itself. Therefore, following the subsequent coating step, a coating film will be obtained, which is perfectly separable from the cardboard sheet.

Preferably, the film is peelable and realized at least with polythene.

In accordance with the method according to the present invention, such first perforation step is performed up to reaching said second face of the sheet. In this case at least a first blade is preferably used that initially enters through the first face, crosses the whole section of the sheet and reaches at least the second face. Preferably said first perforation step is suitable for reducing the connection between said portions of the sheet defining a plurality of perforations separated from one another via connecting bridges that connect the first portion of the sheet to the second portion of the sheet.

In accordance with the method of the invention the first perforation step is performed up to an intermediate level between said first face and said second face. Said first perforation step is suitable for performing a continuous perforation along the weakening line to be obtained.

Such continuous perforation preferably extends along the whole extension of the sheet in an orthogonal direction to the direction with which the first perforation step was performed.

In accordance with the method of the invention the step of realizing the weakening line comprises a second perforation step performed starting from said first face towards said second face. Such second perforation step is subsequent to said first perforation step. The second perforation step is suitable for reducing the connection between said portions defining a plurality of perforations separated from one another via connecting bridges that connect the first portion of the sheet to the second portion of the sheet. The sheet, preferably prior to being covered with the coating film, preferably is at least partially printed with a paint.

Such paint is preferably water-based, such as, for example, an acrylic paint.

According to another aspect, the present invention concerns a support for food products obtained through the production method of the invention. After the first perforation step the orthogonal section to the faces of said sheet and lying on a plane passing through said weakening line, comprises various perforations separated from one another via connecting bridges between said two portions.

In the event in which such support is produced through the method according to the method of the invention the section of said sheet, said section passing through said weakening line and being orthogonal to the faces of said sheet, comprises a first part and a second part. Such first part of such section is adjacent to said first face and comprising a continuous perforation. Such second part of such section is adjacent to said second face and comprising various perforations separated from one another through connecting bridges between said two portions.

The characteristics of the present invention shall be further clarified from reading the following detailed description provided by way of non-limiting example of the more general concepts claimed.

The following detailed description refers to the attached figures, of which:
- figure 1 is a plan view of a cardboard sheet obtainable through a method for producing a support according to the present invention;
- figures 2a and 2b are views of the section of such sheet along such weakening line, respectively in two successive moments during a first possible variation of such method;
- figures 3a, 3b and 3c are views of the section of such sheet along such weakening line, respectively in three successive moments during a second possible variation of such method.

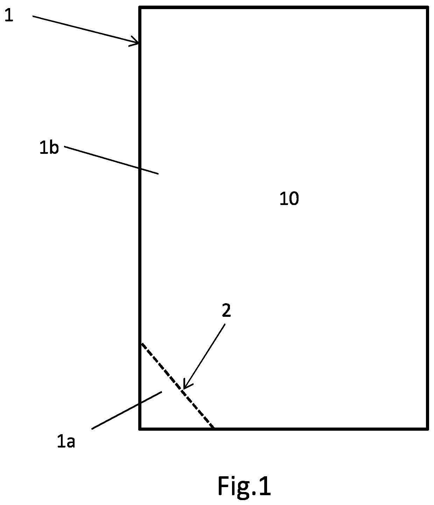

Figure 1 shows a sheet adapted to be part of a support for food products. Sheet 1 is shown completely white for clarity reasons, but it could be printed, during the production method according to the present invention, with a paint, preferably water-based.

The method according to the present invention, for producing a support for food products, comprises the step of preparing the sheet 1 realized with paper material, such as, for example, cardboard. The sheet 1 comprises a first external face 10.

The first face 10 is also indicated in the other figures, which are relative to a cross section of the sheet orthogonal to the plane of figure 1 and passing through the weakening line 2. Such weakening line 2, or fracture line, is realized following a method according to the present invention. The sheet 1 is configured to be coated, on such first face 10, with a film that is not shown in the figures. Such film is preferably suitable, as provided by law, to remain in contact with a food product.

Such film is also preferably peelable.

Such film may be realized preferably at least with polythene.

Such method comprises, subsequently to the provision of said sheet, a step of realizing at least said weakening line 2. The weakening line 2 divides said sheet 1 into at least a first portion 1a and a second portion 1b and therefore defines such first portion 1a and second portion 1b. The first portion 1a is suitable to be lifted and/or detached from said second portion 1b for the purpose of the subsequent separation of said film at least from said second portion 1b.

The step of realizing the weakening line 2 comprises in turn at least a first perforation step performed starting from or entering from said first face 10, towards a second external face 20 of the sheet 1 opposite to said first face 10, which is not visible in figure 1, being on the opposite part of the first face 10 itself.

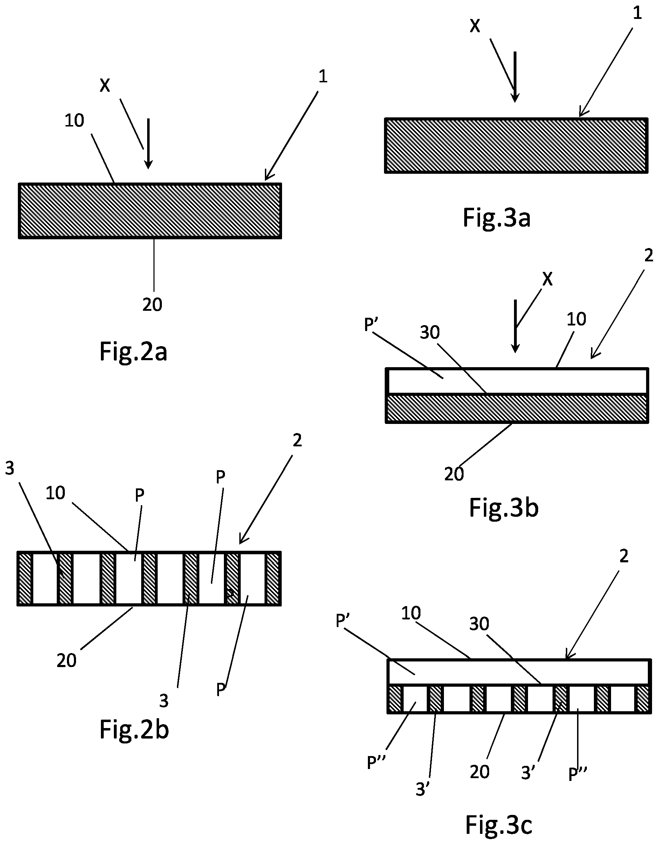

Such first perforation step may be explained through figures 2a and 2b, which are inherent to a first possible variation of the method, or through figures 3a and 3b, which are inherent to a second possible variation of the method.

In figure 2a and in figure 3a, the section shown of the sheet 1 is illustrated prior to the realization of the weakening line 2, and therefore prior to the situation as per figure 1.

The first perforation step is realized according to the arrow X of figure 2a or 3a, both in the first variation and in the second variation of the method.

Preferably, in accordance with both of such variations, the first perforation step is performed through at least a first blade translating in accordance with the arrow X. Such first blade, which is not shown in the figures, while performing the first perforation step, therefore comes from the side of the first face 10.

Such first blade, during said first perforation step, first comes into contact with said first face 10 and crosses the sheet at least partially, going towards the second face 20.

In accordance with the first variation of the method, said first perforation step is performed up to reaching said second face 20. The result of the first perforation step, in accordance with the first variation of the method, is shown in figure 2b.

Such first blade, in accordance with such first variation of the method, preferably completely crosses the sheet 1, precisely up to reaching the second face 20.

In figure 2b it is to be noted that said first perforation step, in accordance with the first variation of the method, is suitable for reducing the connection between said portions 1a and 1b of figure 1, defining a plurality of perforations P separated by connecting bridge 3. The connecting bridges 3 provide a connection between the first portion 1a and the second portion 1b of the sheet 1.

Not all the bridges 3 and not all the perforations P are indicated in figure 2b, for clarity reasons.

In accordance with the method of the invention said perforation step is performed up to an intermediate level between said first face 10 and said second face 20. The first perforation step is performed up to reaching an ideal intermediate surface 30, which initially, at a time preceding the first perforation step, is found within the sheet 1.

The result of the first perforation step, is shown in figure 3b. It is to be noted that such first perforation step, is suitable for performing a continuous perforation P' along the weakening line 2 to be obtained.

Such continuous perforation P' therefore preferably extends along the whole extension of the section of the sheet 1 in an orthogonal direction to the direction with which the first perforation step was performed, according to arrow X.

In accordance with the method of the invention said step of realizing the weakening line 2 comprises a second perforation step performed starting from said first face 10 towards said second face 20. Such second perforation step is subsequent to said first perforation step.

Said second perforation step is also realized according to the arrow X, but starting from the situation of figure 3b.

The second perforation step is preferably performed through at least a second blade translating in accordance with the arrow X. Such second blade, which is not shown in the figures, while performing the second perforation step, therefore comes from the side of the first face 10.

Such second blade, during said second perforation step, first comes into contact with said first face 10 and crosses the sheet 1 at least partially, going towards the second face 20.

The result of the second perforation is shown in figure 3c. It is to be noted that, said second perforation step is suitable for reducing the connection between said portions 1a and 1b of figure 1, defining a plurality of perforations P" separated by connecting bridges 3'. The connecting bridges 3' provide a connection between the first portion 1a and the second portion 1b of the sheet 1.

Not all the bridges 3' and not all the perforations P" are indicated in figure 3c, for clarity reasons.

In the support 1 obtained through the first variation of the method, the cross section of said sheet 1 along said weakening line 2 comprises various perforations P separated from one another through connecting bridges 3 between said two portions 1a and 1b.

In the support obtained through the method of the invention such section comprises a first part adjacent to said first face 10 and comprising a continuous perforation P', and a second part adjacent to said second face 20 and comprising various perforations P" separated from one another through connecting bridges 3' between said two portions 1a and 1b.

Such parts of the section border on opposite faces onto the intermediate surface 30, up to which the first perforation step was performed. The invention reaches the objects proposed, and enables a light support to be obtained for food products in which the cardboard sheet may be completely separable, quickly and easily, from its coating film, so as to be able to immediately recycle the coating materials and the sheet.

## Claims

1. A method for producing a support for food products, comprising the step of preparing a sheet of paper material (1) configured to be covered, on a first side (10) of said sheet, with a film which is suitable to remain in contact with a food product, and subsequently a step of realizing at least a weakening line (2) which divides said sheet into at least a first portion (1a) and a second portion (1b), said first portion being adapted to be detached from said second portion for the purpose of subsequent separation of said film at least from said second portion,
wherein said method comprises a step of coating said first side with said film by means of an adhesive material interposed between said first side and said film, said realization step being performed prior to said coating step,
said realization step in turn comprises at least a first perforation step, which is performed starting from said first side towards a second side (20) opposite to said first side,
wherein said realization step comprises a second perforation step performed starting from said first side towards said second side, and subsequent to said first perforation step,
**characterized in that** said first perforation step is suitable to reduce the connection between said portions, thereby defining a plurality of perforations (P") being separate from one another via connecting bridges (3') between the portions themselves.

2. A method according to claim 1, wherein said film is peelable and is realized at least with polythene.

3. A method according to claim 1 or 2, wherein said first perforation step is performed up to an intermediate level between said first side and said second side.

4. A method according to claim 3, wherein said first perforation step is suitable for performing a continuous perforation (P') along the weakening line to be obtained.

5. A support for food products obtained by a method according to any one of claims 3 and 4, wherein the section of said sheet, said section being passing through said weakening line and orthogonal to said sides, comprises a first part adjacent to said first side and in turn comprising a continuous perforation, and a second part adjacent to said second face and comprising a plurality of perforations being separate from one another via connecting bridges between said two portions.

## Patentansprüche

1. Verfahren zur Herstellung eines Trägers für Nahrungsmittel, umfassend den Schritt der Herstellung eines Blattes aus Papiermaterial (1), das so konfiguriert ist, dass es auf einer ersten Seite (10) des Blattes mit einem Film bedeckt wird, der geeignet ist, mit einem Nahrungsmittel in Kontakt zu bleiben, und anschliessend einen Schritt des Realisierens mindestens einer Schwächungslinie (2), die das Blatt in mindestens einen ersten Abschnitt (1a) und einen zweiten Abschnitt (1b) teilt, wobei der erste Abschnitt so angepasst ist, dass er vom zweiten Abschnitt zum Zwecke der nachfolgenden Trennung des Films mindestens vom zweiten Abschnitt gelöst werden kann,
wobei das Verfahren einen Schritt des Beschichtens der ersten Seite mit dem Film mittels eines zwischen der ersten Seite und dem Film angeordneten Klebematerials umfasst, wobei der Realisierungsschritt vor dem Beschichtungsschritt durchgeführt wird,
wobei der Realisierungsschritt wiederum mindestens einen ersten Perforationsschritt umfasst, der startend von der ersten Seite zu einer zweiten Seite (20) gegenüber der ersten Seite durchgeführt wird,
wobei der Realisierungsschritt einen zweiten Perforationsschritt umfasst, der startend von der ersten Seite zur zweiten Seite und im Anschluss an den ersten Perforationsschritt durchgeführt wird,
**dadurch gekennzeichnet, dass** der erste Perforationsschritt geeignet ist, die Verbindung zwischen den Abschnitten zu reduzieren, wodurch eine Vielzahl von Perforationen (P") definiert wird, die über Verbindungsbrücken (3') zwischen den Abschnitten selbst voneinander getrennt sind.

2. Verfahren nach Anspruch 1, wobei der Film abziehbar ist und mindestens mit Polyethylen realisiert wird.

3. Verfahren nach Anspruch 1 oder 2, wobei der erste Perforationsschritt bis zu einer Zwischenebene zwischen der ersten Seite und der zweiten Seite durchgeführt wird.

4. Verfahren nach Anspruch 3, wobei der erste Perforationsschritt geeignet ist, eine durchgehende Perforation (P') entlang der zu erhaltenden Schwächungslinie durchzuführen.

5. Träger für Nahrungsmittel, der durch ein Verfahren nach einem der Ansprüche 3 und 4 erhalten wird, wobei der Abschnitt des Blattes, der durch die Schwächungslinie und senkrecht zu den Seiten verläuft, einen ersten Teil, der an die erste Seite angrenzt und wiederum eine durchgehende Perforation umfasst, und einen zweiten Teil umfasst, der an die zweite Fläche angrenzt und eine Vielzahl von Perforationen umfasst, die über Verbindungsbrücken zwischen den beiden Abschnitten voneinander getrennt sind.

## Revendications

1. Procédé de fabrication d'un support pour produits alimentaires comprenant l'étape consistant à préparer une feuille en papier (1), configuré pour être recouvert, sur un premier côté (10) de ladite feuille, avec un film pouvant rester en contact avec un produit alimentaire, et par la suite une étape consistant à réaliser au moins une ligne de faiblesse (2) qui divise ladite feuille en au moins une première partie (la) et une seconde partie (1b), ladite première partie pouvant être détachée de ladite seconde partie en vue de séparer par la suite ledit film au moins de ladite seconde partie,
dans lequel ledit procédé comprend une étape consistant à recouvrir ledit premier côté avec ledit film au moyen d'un matériau adhésif interposé entre ledit premier côté et ledit film, ladite étape de réalisation étant effectuée avant ladite étape de recouvrement,
ladite étape de réalisation comprenant à son tour au moins une première étape de perforation étant réalisée en commençant à partir dudit premier côté vers un second côté (20) opposé au dit premier côté,
dans lequel ladite étape de réalisation comprend une seconde étape de perforation effectuée en commençant à partir du premier côté vers ledit second côté, et postérieure à ladite première étape de perforation, **caractérisé en ce que** ladite première étape de perforation peut réduire la liaison entre lesdites parties, définissant ainsi une pluralité de perforations (P") étant séparées les unes des autres via des ponts de raccordement (3') entre les parties elles-mêmes.

2. Procédé selon la revendication 1, dans lequel ledit film peut être pelé et est réalisé au moins avec du polythène.

3. Procédé selon la revendication 1 ou 2, dans lequel ladite première étape de perforation est réalisée jusqu'à un niveau intermédiaire entre ledit premier côté et ledit second côté.

4. Procédé selon la revendication 3, dans lequel ladite première étape de perforation est adaptée pour effectuer une perforation continue (P') le long de la ligne de faiblesse à obtenir.

5. Support pour produits alimentaires obtenu par un procédé selon l'une quelconque des revendications 3 et 4, dans lequel la section de ladite feuille, ladite section étant passante à travers ladite ligne de faiblesse et étant orthogonale auxdits côtés, comprend une première partie adjacente au dit premier côté et à son tour comprenant une perforation continue, et une seconde partie adjacente au dit second côté et comprenant une pluralité de perforations étant séparées les unes des autres via des ponts de liaison entre lesdites deux parties.
